# EUROPEAN PATENT SPECIFICATION

(11) **EP 3 324 460 B1**
(45) Date of publication and mention of the grant of the patent: **03.07.2019**
(21) Application number: 17202044.8
(22) Date of filing: 16.11.2017
(51) Int. Cl.: H01M 2/10, H01M 2/18

(54) **BATTERY ASSEMBLY AND SPACER**
BATTERIEANORDNUNG UND ABSTANDSHALTER
ENSEMBLE DE BATTERIE ET ESPACEUR

(30) Priority: 18.11.2016 KR 20160154201
(43) Date of publication of application: 23.05.2018
(73) Proprietor: Samsung Electronics Co., Ltd., Gyeonggi-do 16677 (KR)
(72) Inventor: HWANG, Hyosun, 16678 Suwon-si, Gyeonggi-do (KR); SOHN, DongKee, 16678 Suwon-si, Gyeonggi-do (KR); PARK, SangDo, 16678 Suwon-si, Gyeonggi-do (KR); OH, Duk Jin, 16678 Suwon-si, Gyeonggi-do (KR)
(74) Representative: Grünecker Patent- und Rechtsanwälte PartG mbB

(56) References cited:
- EP-A1- 1 643 570
- EP-A1- 1 852 924

## Description

### BACKGROUND

### 1. Field

The following description relates to a battery assembly and spacer.

### 2. Description of Related Art

An elastic spacer has been developed to handle elastic changes in volume of a plurality of batteries in a battery pack.

European patent application EP 1 852 924 A1 discloses a battery pack constructed of a plurality of battery modules arranged with a space therebetween wherein a holding spacer is placed in the space between adjacent battery modules. The spacer is provided with a plurality of first elastic members and second elastic members which interact with a first and second spacer support member in a vertical direction to elastically hold the holding spacer between the support members.

European patent application EP 1 643 570 A1 discloses a restraining tool for a battery pack with a lower weight than known in the art. The purpose of such a restraining tool is described as restraining the expansion of the cases of the battery modules due to internal pressure of the cells. More specifically, the application discloses a spacer portion with a plurality of appropriately spaced protrusions extending on both sides of a connection plate wherein the interval between the protrusions is set such that expansion of the long side faces of the cells is prevented effectively.

### SUMMARY

This Summary is provided to introduce a selection of concepts in a simplified form that are further described below in the Detailed Description.

This Summary is not intended to identify key features or essential features of the claimed subject matter, nor is the Summary intended to be used as an aid in determining the scope of the claimed subject matter.

In one general aspect, a battery spacer system according to claim 1 is provided. In a further aspect, a battery assembly according to claim 10 is provided. Preferred embodiments are subject of the dependent claims.

The battery spacer may include a base inserted between the two adjacent battery cells, and the at least one plastically-deformable portion may be configured to begin to plastically deform when a distance between the two adjacent battery cells becomes less than a setting distance, the setting distance being less than an initial distance between the two adjacent battery cells, and the at least one elastically-deformable portion may be configured to be elastically deformed when the distance is greater than or equal to the setting distance and less than the initial distance.

The at least one plastically-deformable portion may have a greater rigidity and lesser strength than the at least one elastically-deformable portion.

The at least one elastically-deformable portion may have a progressing shape that reverses in a height direction relative to the base at least once.

The at least one elastically-deformable portion may protrude in a first direction relative to a face of the base, and a corresponding one of the at least one plastically-deformable portion may extend in the first direction from the at least one elastically-deformable portion.

An end portion of the corresponding one of the at least one plastically-deformable portion may be formed at a position of the battery spacer that is higher than a maximum height of the at least one elastically-deformable portion, relative to a face of the base.

The at least one elastically-deformable portion and the corresponding one of the at least one plastically-deformable portion may be formed of a same material.

A thickness of the corresponding one of the at least one plastically-deformable portion may be less than a thickness of the at least one elastically-deformable portion.

The corresponding one of the at least one plastically-deformable portion may include at least one cut-out portion.

The cut-out portion may be a recess recessed from the end portion toward the base.

The cut-out portion may be a slot formed on the corresponding one of the at least one plastically-deformable portion.

The slot may be laterally formed along a circumference of the corresponding one of the at least one plastically-deformable portion.

The at least one elastically-deformable portion and the corresponding one of the at least one plastically-deformable portion may be formed of different materials.

The at least one plastically-deformable portion may protrude in a first direction relative to a face of the base, and a corresponding one of the at least one elastically-deformable portion may extend in the first direction from the at least one plastically-deformable portion.

The battery spacer may further include a protrusion including the at least one plastically-deformable portion and a corresponding one of the at least one elastically-deformable portion protruding from the base.

The base may include an opening, and the protrusion may be formed to enclose the opening.

The opening may have a shape of a circle, a polygon, or a slit.

The protrusion may be formed of a polymer, aluminum, or phosphor bronze.

The battery spacer system may be a battery assembly that includes a base with plural protrusions, and the battery spacer system may further include the two adjacent battery cells and the plural protrusions, each including a corresponding elastically-deformable portion and corresponding plastically-deformable portion, that may be disposed between the two adjacent battery cells to protrude in a direction from one of the two adjacent battery cells toward another of the two adjacent cells.

The plurality of protrusions may be more densely arranged in a central area of the base between the two adjacent battery cells than in another protrusion-including non-central area of the base between the two adjacent battery cells.

In a general aspect, a battery assembly may include a first battery cell, a second battery cell, and a battery spacer disposed between the first battery cell and the second battery cell, the battery spacer being configured to include at least one plastically-deformable portion that is configured to begin to plastically deform upon a distance between the first battery cell and the second battery cell becoming less than a predetermined value due to a change in at least one of the first battery cell and the second battery cell.

The battery spacer may include a base in contact with the first battery cell, and a plurality of protrusions that protrude in a direction from the base toward the second battery cell, where each of the plurality of protrusions may include a plastically-deformable portion configured to plastically deform when the distance is less than a setting distance, the setting distance being less than an initial distance between the first battery cell and the second battery cell, and an elastically-deformable portion configured to elastically deform when the distance is greater than or equal to the setting distance and less than the initial distance.

The plurality of protrusions may be more densely arranged in a first protrusion-including area of the base between the two adjacent battery cells than in another protrusion-including area of the base between the two adjacent battery cells.

A number of protrusions per unit area of the base may increase from an edge of the base toward a center of the base.

The battery assembly may further include a stiffening plate disposed between the second battery cell and the plurality of protrusions.

Each of the plastically-deformable portions may have a length between 2.5 percent (%) and 10% of an initial operating thickness of one of the first battery cell and the second battery cell.

Other features and aspects will be apparent from the following detailed description, the drawings, and the claims.

### BRIEF DESCRIPTION OF THE DRAWINGS

FIG. 1 is a side view illustrating a battery assembly in accordance with an embodiment.
FIG. 2 is a perspective view illustrating a spacer in accordance with an embodiment.
FIG. 3 is an enlarged view illustrating a portion of a spacer in accordance with an embodiment.
FIG. 4 is a cross-sectional view illustrating a portion of a spacer in accordance with an embodiment.
FIG. 5 is a diagram illustrating a spacer disposed between two battery cells in accordance with an embodiment.
FIG. 6 is a diagram illustrating a spacer in an elastically deformed state in accordance with an embodiment.
FIG. 7 is a diagram illustrating a spacer that is elastically deformed by a maximum deformable distance in accordance with an embodiment.
FIG. 8 is an enlarged view illustrating a portion A of FIG. 7.
FIG. 9 is a diagram illustrating a spacer in an elastically and plastically deformed state in accordance with an embodiment.
FIG. 10 is an enlarged view illustrating a portion B of FIG. 9.
FIG. 11 is a diagram illustrating a spacer in a plastically deformed state in accordance with an embodiment.
FIG. 12 is a diagram illustrating a spacer that is elastically deformed by a maximum deformable distance in a plastically deformed state in accordance with an embodiment.
FIGS. 13 through 19 illustrate example spacer configurations.
FIG. 20 is a perspective view illustrating a spacer in accordance with an embodiment.
FIG. 21 is a side view illustrating a battery assembly in accordance with an embodiment.

Throughout the drawings and the detailed description, unless otherwise described or provided, the same drawing reference numerals are available for being understood to refer to the same or like elements, features, and structures, though that use of the same reference numerals in different drawings should not be limited to such an understanding and is merely used for convenience of explanation between examples or embodiments. Thus, though the same reference numerals may be used in different drawings, each of the drawings is representative of a respective one or more embodiments, such that each of the respective one or more embodiments represented by one drawing with the same reference numerals are also available to be distinguishable from one or more embodiments in one or more or all other drawings with the same reference numerals. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Various alterations and modifications may be made to the examples. Here, the examples are not construed as limited to the disclosure and should be understood to include all changes, equivalents, and replacements within the idea and the technical scope of the disclosure.

In addition, terms such as first, second, A, B, (a), (b), and the like may be used herein to describe components. Each of these terminologies is not used to define an essence, order or sequence of a corresponding component but used merely to distinguish the corresponding component from other component(s). It should be noted that if it is described in the specification that one component is "connected", "coupled", or "joined" to another component, a third component may be "connected", "coupled", and "joined" between the first and second components, although the first component may be directly connected, coupled or joined to the second component.

Spatially relative terms such as "above," "upper," "below," and "lower" may be used herein for ease of description to describe one element's relationship to another element as shown in the figures. Such spatially relative terms are intended to encompass different orientations of the device in use or operation in addition to the orientation depicted in the figures. For example, if the device in the figures is turned over, an element described as being "above" or "upper" relative to another element will then be "below" or "lower" relative to the other element. Thus, the term "above" encompasses both the above and below orientations depending on the spatial orientation of the device. The device may also be oriented in other ways (for example, rotated 90 degrees or at other orientations), and the spatially relative terms used herein are to be interpreted accordingly.

It should also be appreciated that references throughout this specification to an example, one example, an embodiment, one embodiment, or one or more embodiments, as only examples, or references to features that may be included in one or more of such embodiments, mean that the particular feature(s), structure(s), or characteristic(s) described in connection with the examples or embodiments are features that are included in at least one embodiment of the disclosure. Therefore, it should be appreciated that two or more references to an example, an alternative example, an embodiment, one embodiment, one or more embodiments, an alternative embodiment, or features that may be included in such one or more examples or embodiments, in various portions of this specification, are not necessarily referring to the same example or embodiment, though the disclosure supports such a reference. Furthermore, the particular features, structures or characteristics may be combined as suitable in one or more embodiments of the disclosure. For example, if a feature is referred to in that it may be included in an example or embodiment, then the feature may additionally be included in any or all of the other embodiments. Likewise, while particular feature(s), structure(s), or characteristic(s) described in connection with an example or embodiment may be discussed with respect to an example or embodiment, it should also be appreciated that unless specifically stated, or clearly indicated through context, such feature(s), structure(s), or characteristic(s) are not required of all embodiments.

Due to manufacturing techniques and/or tolerances, variations of the shapes shown in the drawings may occur. Thus, the examples described herein are not limited to the specific shapes shown in the drawings, but may also include changes in shape that occur during manufacturing.

In this disclosure, same names may also be used to describe elements included in one example and elements having common, like, or related functions and/or structures in another example. Unless otherwise mentioned, the descriptions related to any one example may be applicable to any one or more or all remaining examples, and thus repeated descriptions will be omitted. However, it is also noted that the use of such same names (or same reference numerals) has been made for convenience of explanation, and the use of the same names (or same reference numerals) to describe elements in different examples should also not be understood to limit embodiments to require the elements to have common, like, or related functions or structures, unless explicitly required or through specific context.

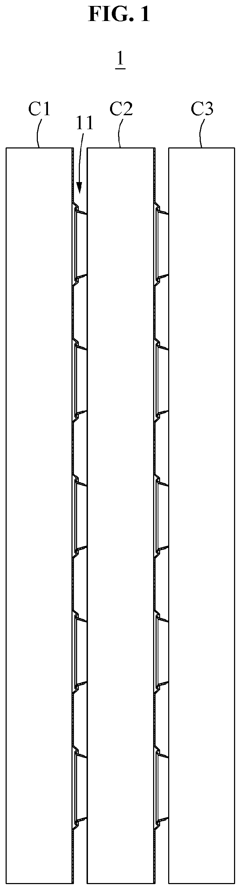

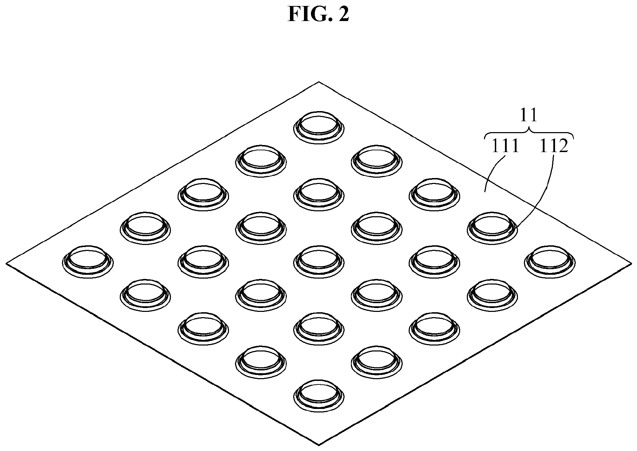

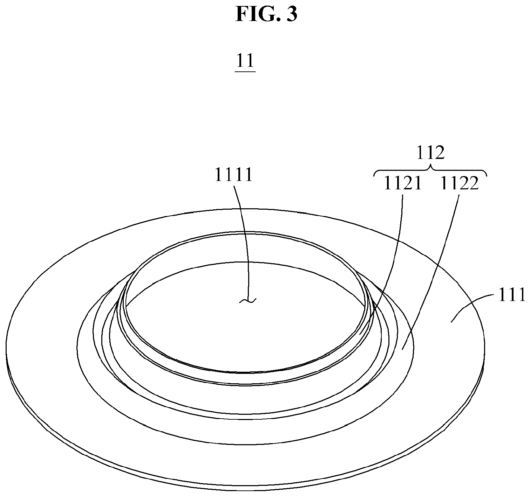

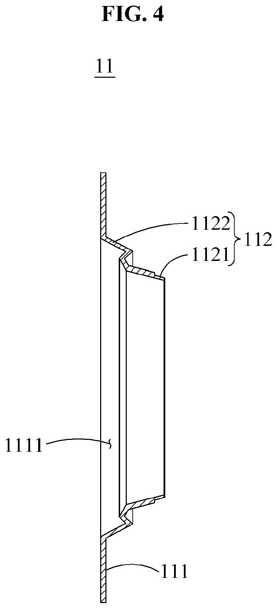

FIG. 1 is a side view illustrating a battery assembly in accordance with an embodiment, FIG. 2 is a perspective view illustrating a spacer in accordance with an embodiment, FIG. 3 is an enlarged view illustrating a portion of a spacer in accordance with an embodiment, and FIG. 4 is a cross-sectional view illustrating a portion of a spacer in accordance with an embodiment.

Referring to FIGS. 1 through 4, each battery assembly 1 may include a first battery cell C1 and a second battery cell C2 disposed adjacent to each other, and respective spacers 11 disposed between the first battery cell C1 and the second battery cell C2. In addition, additional battery cells may be adjacently included or stacked in the battery assembly 1, such as the illustrated further adjacent third battery cell C3, with respective spacers 11 being disposed between the second battery cell C2 and the third battery cell C3.

Each spacer 11 is elastically and/or plastically deformable dependent on a cell distance between the first battery cell C1 and the second battery cell C2, for example. Herein, an elastic deformation has a meaning that conforms with a temporary or reversible shape change that can be self-reversing, such as after an applied force that caused the deformation is removed. For example, herein, after an applied force is withdrawn from an elastically-deformable portion/element that has deformed due to the applied force, the elastically-deformable portion/element may return to a previous form when the force was not applied. For example, an elastic deformation of the elastically-deformable portion/element is temporary. Rather, herein, when stress is sufficient to permanently deform an element, such a deformation may be understood to correspond to plastic deformation. Thus, with such a plastic term having a consistent meaning throughout this disclosure, when such sufficient stress is present, or sufficient force applied to, a plastically-deformable portion/element, the plastically-deformable portion/element may have a configuration so as to permanently deform.

Accordingly, an interval between the first battery cell C1 and the second battery cell C2, for example, may respectively vary based on, for example, reversible changes in volume based on a change in temperature or charging and discharging of the first battery cell C1 and the second battery cell C2, for example, or may respectively vary based on an irreversible increase in volume based on deteriorations of the first battery cell C1 and the second battery cell C2, for example. In this example, the reversible change in volume may indicate a change in volume of the first battery cell C1 and the second battery cell C2 in an elastic area, for example. As further discussed below in differing embodiments, an example spacer 11 may be elastically deformed at a weight, force, or stress in a predetermined range and plastically deformed at a weight, force, or stress exceeding the predetermined range. Also, an example spacer 11 may be elastically or plastically deformed in response to a change in the interval between the first battery cell C1 and the second battery cell C2, for example. An example spacer 11 may include a base 111 inserted between two adjacent battery cells, for example, and include a protrusion 112 formed to protrude from the base 111. Such a base 111 may be in contact with the example first battery cell C1, e.g., directly in contact, and the protrusion 112 may protrude from the base 111, e.g., toward the example second battery cell C2.

As illustrated in FIGS. 3 and 4, the protrusion 112 may include an elastically-deformable portion 1122 configured to be deformed by an external force exerted in a longitudinal direction relative to the protrusion 1122, and a plastically-deformable portion 1121 greater in rigidity and lesser in strength than the elastically-deformable portion 1122. For example, the example spacer 11 may be configured such that a flexural strength of the elastically-deformable portion 1122 is greater than a flexural strength of the plastically-deformable portion 1121. In this example, the flexural strength indicates an intact strength against an external flexural strength applied to an object body, and may be defined by a division of stress by a corresponding cross-sectional area. This stress occurs when the object body is bent at a weight or force and fractured due to a flexure increasing according to an increase of the weight or force. For example, volumes of battery cells may permanently increase over time due to degradation of the respective battery cells. In this example, when the volumes are still further increased, e.g., according to an increase in temperature along with such degradation, such that a force exceeding an elasticity limit of the protrusion 112 is applied to the spacer 11, the plastically-deformable portion 1121 may be permanently deformed before a permanent deformation of the elastically-deformable portion 1122 because the flexural strength of the elastically-deformable portion 1122 is greater than the flexural strength of the plastically-deformable portion 1121.

The elastically-deformable portion 1122 may have a shape that is vertically curved at least once relative to the base 111. As only examples, the vertical curve may have an inverted J, or V curve shape, where a height of the elastically-deformable portion 1122 increases with respect to the base 111 and then may decrease, e.g., slightly decrease, before the plastically-deformable portion 1121. Based on such a structure, the elastically-deformable portion 1122 may be elastically deformed by a force exerted in a vertical or perpendicular direction to the base 111.

A thickness of the plastically-deformable portion 1121 may be less than a thickness of the elastically-deformable portion 1122, e.g., such as when the plastically-deformable portion 1121 and the elastically-deformable portion 1122 are made of a same material. With this structure, the plastically-deformable portion 1121 has the flexural strength less than that of the elastically-deformable portion 1122.

Thus, in an example, the elastically-deformable portion 1122 and the plastically-deformable portion 1121 of the protrusion 112 are formed of a same material and thus have different rigidities and strengths based on such structures and shapes of the elastically-deformable portion 1122 and the plastically-deformable portion 1121. As only examples, the protrusion 112 may be formed of a polymer, aluminum, or phosphor bronze, noting that alternatives are available. In an example, the polymer may be polyethylene or polyvinyl chloride, again noting that alternatives are available.

Thus, the elastically-deformable portion 1122 protrudes from a face of the base 111 in contact with the first battery cell C1 in a first direction toward the second battery cell C2. The plastically-deformable portion 1121 extends in the first direction from the elastically-deformable portion 1122. An end portion of the plastically-deformable portion 1121 is formed at a position higher than a maximum height of the elastically-deformable portion 1122 with respect to the face of the base 111. By applying the aforementioned structure, the example plastically-deformable portion 1121 may be easily and/or readily formed or configured, and thus, the example spacer 11 may achieve advantageousness in terms of production costs and manufacturing processing time over previous battery spacer approaches.

In an example, the base 111 may include an opening 1111. In an example, the opening 1111 may have a configuration to provide a cooling channel even when the elastically-deformable portion 1122 is elastically deformed, and/or even when the plastically-deformable portion 1121 is plastically deformed. The protrusion 112 may be formed to enclose or encircle the opening 1111. For example, as illustrated in FIG. 3, the elastically-deformable portion 1122 may enclose or encircle the opening 1111 formed on the base 111, and the plastically-deformable portion 1121 may extend in the first direction from an end of the elastically-deformable portion 1122 or from a portion of the protrusion 112 between the elastically-deformable portion 1122 and the plastically-deformable portion 1121.

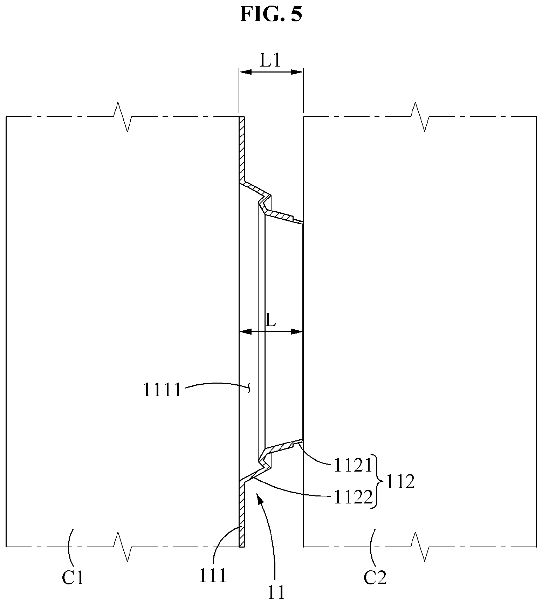

Hereinafter, an example operating of a spacer 11 in response to changes in volume of a first battery cell C1 and a second battery cell C2, for example, in a battery assembly will be described with reference to FIGS. 5 through 12.

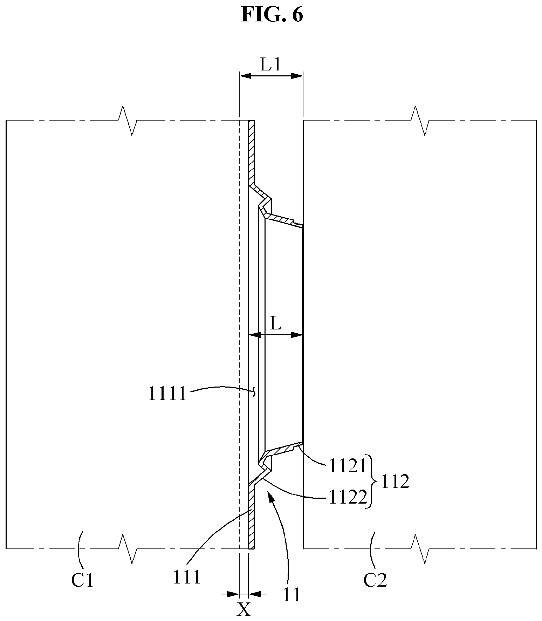

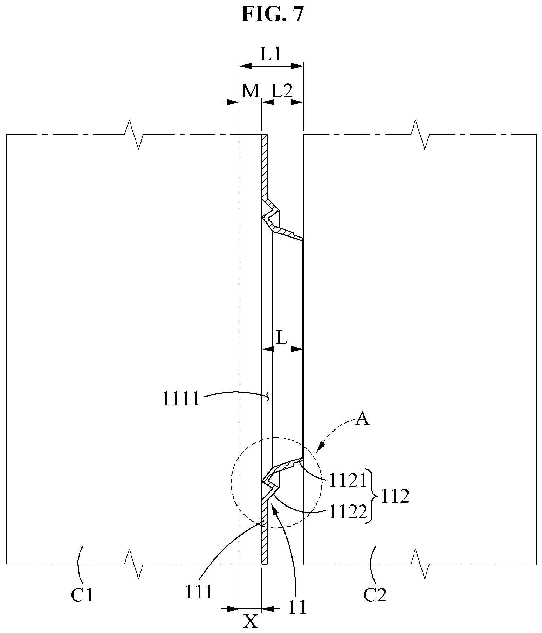

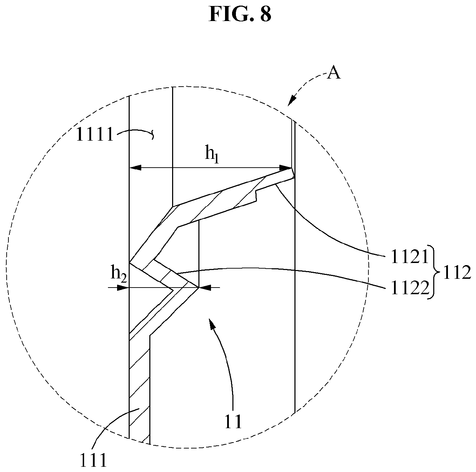

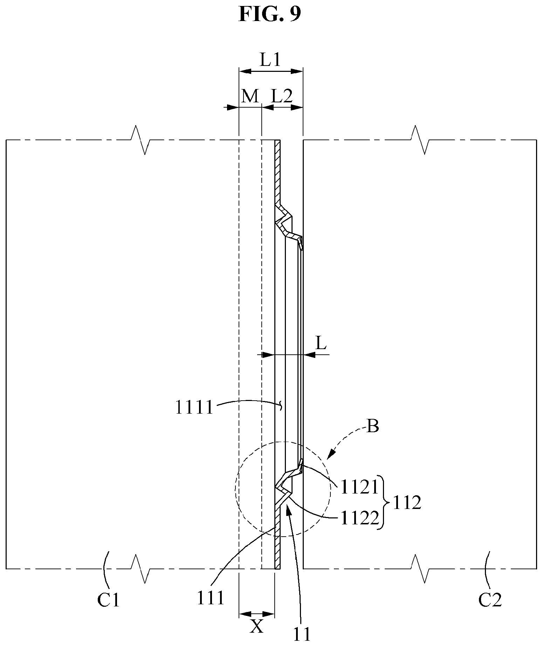

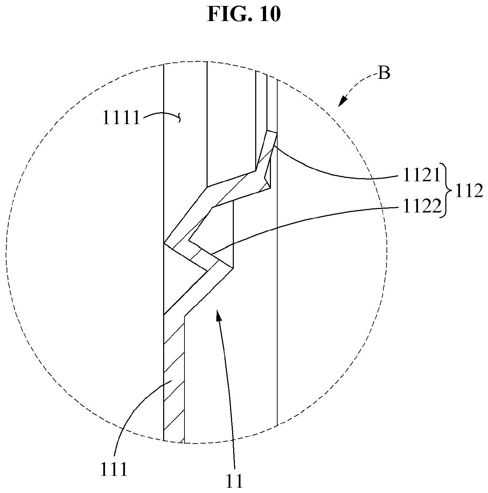

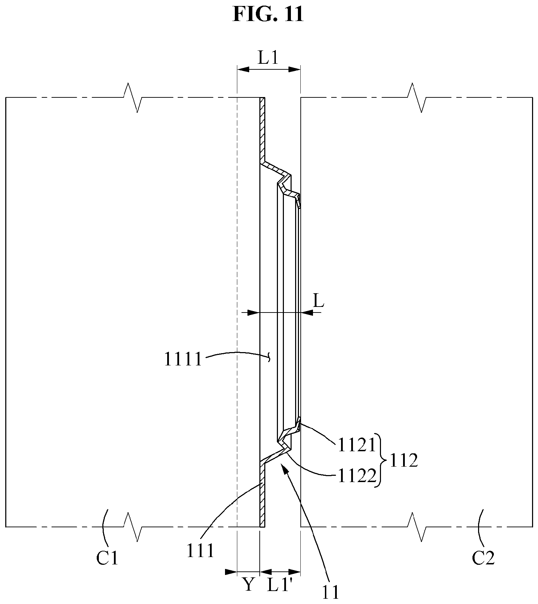

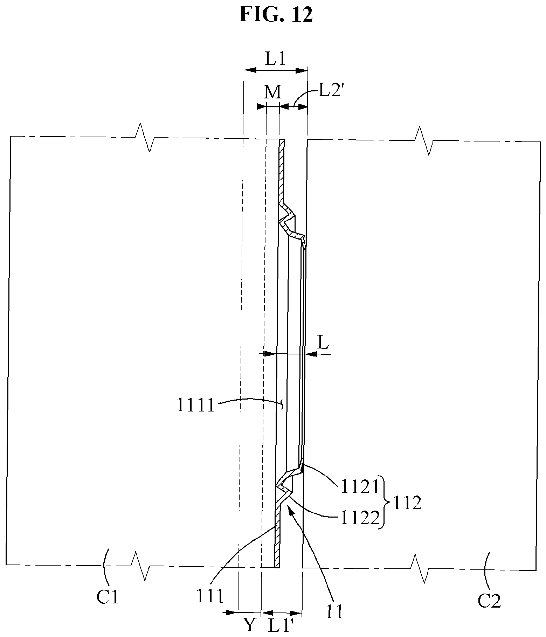

FIG. 5 is a diagram illustrating a spacer disposed between two battery cells in accordance with an embodiment. FIG. 6 is a diagram illustrating a spacer in an elastically deformed state in accordance with an embodiment. FIG. 7 is a diagram illustrating a spacer that is elastically deformed by a maximum deformable distance in accordance with an embodiment. FIG. 8 is an enlarged view illustrating a portion A of FIG. 7. FIG. 9 is a diagram illustrating a spacer in an elastically and plastically deformed state in accordance with an embodiment. FIG. 10 is an enlarged view illustrating a portion B of FIG. 9. FIG. 11 is a diagram illustrating a spacer in a plastically deformed state in accordance with an embodiment. FIG. 12 is a diagram illustrating a spacer that is elastically deformed by a maximum deformable distance in a plastically deformed state in accordance with an embodiment.

In FIG. 5, a cell distance L is a distance between the first battery cell C1 and the second battery cell. Also, an initial distance L1 is a cell distance measured when the first battery cell C1 and the second battery cell C2 are maintained in typical volumes without expansion.

In FIG. 6, the volumes of the first battery cell C1 and the second battery cell C2 are illustrated as having changed from the initial configuration of FIG. 5, such as based on a charging and discharging of the first and second battery cells C1, C2, changes in temperature, or degradation of either or both of the first and second battery cells C1, C2, as examples only. For example, in response to the changed volumes, the cell distance L has decreased to be less than the initial distance L1. Hereinafter, the descriptions will be provided based on an example in which a width of the first battery cell C1 is changed by a variation X in response to the change in volume of the first battery cell C1. In the example of FIG. 6, an elastically-deformable portion 1122 of the protrusion 112 is illustrated as being contractively deformed, corresponding to the variation X. Thus, with the contractive deformation of the protrusion 112, a total volume of the battery assembly may remain the same as in the initial state of FIG. 5.

In FIGS. 7 and 8, a maximum deformable distance M is a distance to which the elastically-deformable portion 1122 is maximally elastically deformable, and a setting distance L2 corresponds to a value obtained by subtracting the maximum deformable distance M from the initial distance L1.

As illustrated in FIGS. 6 through 8, when the variation X is less than or equal to the maximum deformable distance M, the elastically-deformable portion 1122 of the protrusion 112 is contractively deformed and the plastically-deformable portion 1121 of the protrusion 112 may not be deformed, e.g., not deformed at all. The spacer 11 may be configured so that the maximum deformable distance M is greater than or equal to a maximum value of the variation X obtained in response to a reversible change, e.g., an expected or potential reversible change, in volume of the first battery cell C1 and the second battery cell C2 to which the spacer 11 is to be applied. For example, in configuring the protrusion 112 with respect to the first and second battery cells C1, C2, e.g., with respect to known characteristics of the first and second battery cells C1, C2, the spacer 11 may be configured so that the distance L2 is less than a minimum value of the cell distance L obtained in response to the reversible change in volume of the first battery cell C1 and the second battery cell C2 to which the spacer 11 may be applied, for example. In this example, while the volumes of the first battery cell C1 and the second battery cell C2 are reversibly changed, e.g., their volumes may change and then return to an initial volume such as due to a temperature change, the plastically-deformable portion 1121 is not deformed and only the elastically-deformable portion 1122 may be contractively or expansively deformed. Through this, a change in the total volume of the battery assembly from an initial total volume may be prevented.

When the cell distance L changes to be greater than or equal to the setting distance L2 and less than the initial distance L1 in response to reversible contractions of the volumes of the first battery cell C1 and the second battery cell C2, the elastically-deformable portion 1122 is contracted and the plastically-deformable portion 1121 may not be deformed. In this example, when the cell distance L begins to change toward becoming equal to the initial distance L1 again, in response to reversing contractions of the volumes of the first battery cell C1 and the second battery cell C2, the elastically-deformable portion 1122 may expand, and thus, the spacer 11 may be restored to have the original or initial shape when the cell distance L becomes equal to the initial distance L1.

Referring to FIGS. 7 and 8, a portion of the elastically-deformable portion 1122 of the protrusion 112 is illustrated as having contacted the first battery cell C1 due to an increase of the variation X. In this example and as illustrated in FIG. 8, a height h1 of an example end portion of the plastically-deformable portion 1121 is greater than a maximum height h2 of the elastically-deformable portion 1122 with respect to a face or surface of the base 111.

FIGS. 9 and 10 demonstrate a simultaneous occurrence of an irreversible change in volume of the first battery cell C1 and a reversible change in volume of the first battery cell C1, e.g., respectively due to a degradation of the first battery cell C1 and/or the second battery cell C2 and a temperature change. In the example of FIGS. 9 and 10, the variation X of the first battery cell C1 is illustrated as having exceeded the maximum deformable distance M due to the change in the cell distance L, and thus, the plastically-deformable portion 1121 has been contractively deformed in a state in which the elastically-deformable portion 1122 is maximally contracted. For example, when the cell distance L is less than the setting distance L2, the plastically-deformable portion 1121 may begin to be contractively deformed. Accordingly, with the deformation of elastically-deformable portion 1122 and the plastically-deformable portion, a total volume of the battery assembly may remain the same, e.g., the same as an initial or original total volume.

Referring to FIGS. 9 and 10, a portion of the elastically-deformable portion 1122 of the protrusion 112 contacts the first battery cell C1 due to the increase of the variation X. When volumes of the first battery cell C1 and the second battery cell C2 expand in a state in which the elastically-deformable portion 1122 is maximally elastically contracted, the plastically-deformable portion 1121 of the protrusion 112 may be configured to begin to be plastically contracted.

FIG. 11 will be used to demonstrate the effects of a subsequent reversing volume contraction and an irreversible volume expansion in the first battery cell C1. In this example, in a state in which the plastically-deformable portion 1121 has been plastically contracted, and the volume of the first battery cell C1 contracts by an amount of the previous reversible volume expansion, the elastically-deformable portion 1122 may be correspondingly restored by the change amount of the cell distance L that occurs in response to the reversing volume contraction of the first battery cell C1. Here, a variation Y in the irreversible volume expansion of the first battery cell C1 is demonstrated as being consistently maintained from the previous example of FIGS. 9 and 10, and thus, the plastically-deformable portion 1121 has maintained the previously discussed plastically contracted state. Thus, an influence of volumes of battery cells is compensated and a total volume of the battery assembly may remain the same, e.g., the same as an initial or original total volume. In this example, the cell distance L in a state in which an influence of the reversible volume expansion has been eliminated while the plastically-deformable portion 1121 has been irreversibly deformed is referred to as an initial distance L1'. The initial distance L1' is understood as, for example, to correspond to the cell distance L in a state in which an influence of the irreversible volume expansion remains and is counteracted by the plastic contraction of the plastically-deformable portion 1121. Also, due to the plastic contraction of the plastically-deformable portion 1121, the initial distance L1' is less than the initial distance L1.

FIG. 12 demonstrates a state of the spacer 11 when the elastically-deformable portion 1122 is contracted to the maximum deformable distance M and the plastically-deformable portion 1121 is plastically deformed at least to the extent discussed above with respect to FIGS. 9-11. Here, a setting distance L2' corresponding to a value obtained by subtracting the maximum deformable distance M from the initial distance L1', discussed above with respect to FIG. 11, is demonstrated as being less than the setting distance L2 discussed above with respect to FIGS. 7 or 9. Similar to the examples of FIGS. 5 through 10, the spacer 11 has been maximally elastically deformed and may be further plastically deformed in response to additional reversible volume change and/or irreversible volume change of the first battery cell C1 to maintain an initial total volume of the battery assembly.

Accordingly, the plastically-deformable portion 1121 may be configured so as to have a length, e.g., which may thereby define available longitudinal heights from the base 111 in a spanning direction between adjacent battery cells depending on deformation of the plastically-deformable portion 1121, that is set based on a rate of known or expected irreversible increases in thickness of one or more adjacent battery cells, for example, the first battery cell C1 and the second battery cell C2. For example, an irreversible thickness change of a battery cell due to degradation may be about 5 percent (%) of its initial thickness. Thus, in an example, the length of the plastically-deformable portion 1121 may be configured so as to be between 2.5% and 10% of an initial thickness of an expected, typical, or generic battery cell in a battery assembly that the spacer will or may be used. Through this, an excessive increase in thickness of the battery assembly may be prevented and an irreversible thickness change occurring during an operation of the battery assembly 1 may be offset or compensated for.

By applying such aforementioned configurations to the example spacer 11, depending on embodiment, a total size of a battery assembly may be maintained uniformly irrespective of volume expansion or contraction of battery cells of the battery assembly. In addition, with such accommodations by the example spacer 11, movement of the battery cells may be minimized or prevented so that conductive wires connected to the respective battery cells can be readily assembled and may more consistently maintain connection. Also, with the example spacer 11 pressures applied to each of the battery cells may be maintained uniformly.

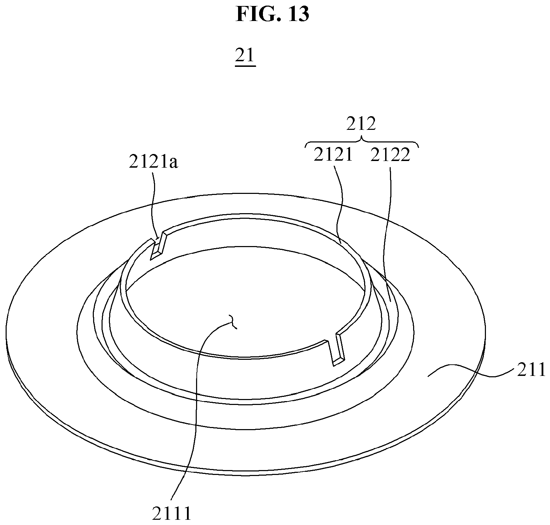

FIGS. 13 through 19 illustrate non-limiting example spacer configurations.

Referring to FIG. 13, a spacer 21 includes a base 211 and a protrusion 212. The base 211 may include an opening 2111. The protrusion 212 includes a plastically-deformable portion 2121 and an elastically-deformable portion 2122.

The plastically-deformable portion 2121 includes at least one cut-out portion 2121a. The cut-out portion 2121a may be a recess recessed from an end portion of the plastically-deformable portion 2121 toward the base 211. For example, the cut-out portion 2121a may be formed as a recess recessed in a vertical direction from the end portion of the plastically-deformable portion 2121. In an example, there may be one or more vertical direction recesses that respectively have one or more different vertical heights. The vertical height may be less than or equal to, for example, a height of the plastically-deformable portion 2121, and thus, the protrusion 212 may include one or more plastically-deformable portions 2121, for example. In this example, the plastically-deformable portion 2121 including the recess has a flexural strength less than that of the elastically-deformable portion 2122. Based on the aforementioned example structures and shapes of elastically-deformable portions and plastically-deformable portions and corresponding discussions, it can be seen that the elastically-deformable portion 2122 and the plastically-deformable portion 2121 of the protrusion 212 may be formed of the same material, for example, though with different rigidities and strengths.

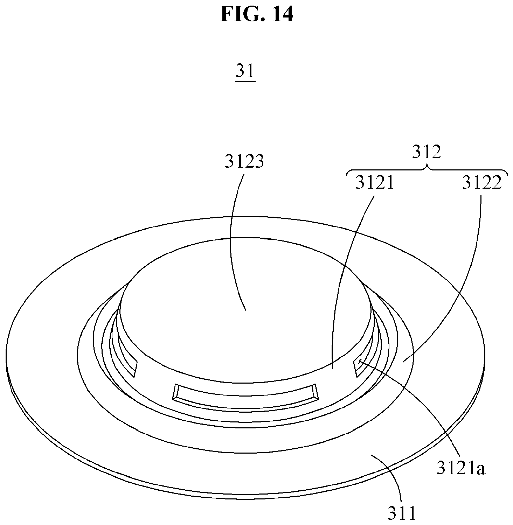

Referring to FIG. 14, a spacer 31 includes a base 311 and a protrusion 312. The protrusion 312 includes a plastically-deformable portion 3121, an elastically-deformable portion 3122, and a contacting portion 3123, for example.

The plastically-deformable portion 3121 may include at least one cut-out portion 3121a. The cut-out portion 3121a may have a slot shape, such as the illustrated slot formed on the plastically-deformable portion 3121. For example, the slot may be laterally formed along part of a circumference of the plastically-deformable portion 3121, such as the illustrated cut-out portion 3121a formed as a slot on one face of the plastically-deformable portion 3121. For example, the plastically-deformable portion 3121 may plastically deform through collapsing of the example slots.

The contacting portion 3123 may be disposed on an end portion of the plastically-deformable portion 3121, and formed in a shape of a flat plate, e.g., such as to seal the top of the spacer 31, though embodiments are not limited thereto. Using the contacting portion 3123, a contacting area between the protrusion 312 and an adjacent battery cell may increase and thus, a pressure applied from the spacer 31 to battery cells may be uniformly distributed.

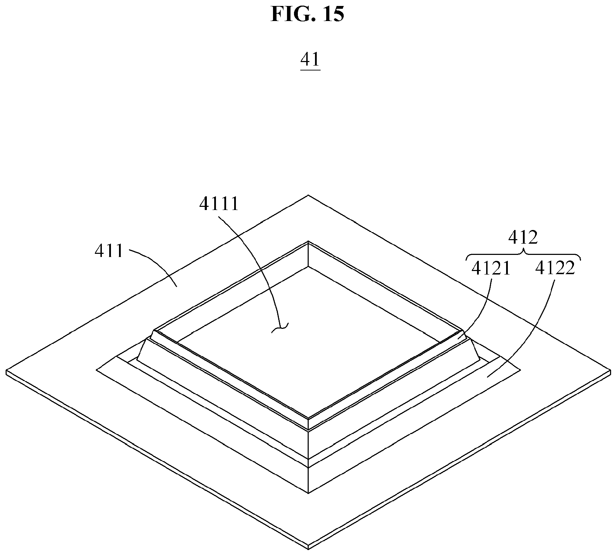

Referring to FIG. 15, a spacer 41 includes a base 411 and a protrusion 412. The base 411 may include an opening 4111, for example. As an example only, the opening 4111 may be formed in a quadrangular shape. The protrusion 412 may be formed to enclose the opening 4111. The protrusion 412 includes a plastically-deformable portion 4121 and an elastically-deformable portion 4122. A thickness of the plastically-deformable portion 4121 may be less than a thickness of the elastically-deformable portion 4122.

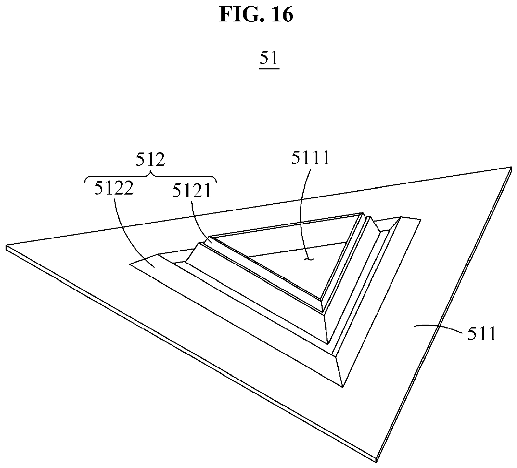

Referring to FIG. 16, a spacer 51 includes a base 511 and a protrusion 512. The base 511 may include an opening 5111, for example. The opening 5111 may be formed in a triangular or other polygonal shape. The protrusion 512 is formed to enclose the opening 5111. The protrusion 512 includes a plastically-deformable portion 5121 and an elastically-deformable portion 5122. A thickness of the plastically-deformable portion 5121 may be less than a thickness of the elastically-deformable portion 5122.

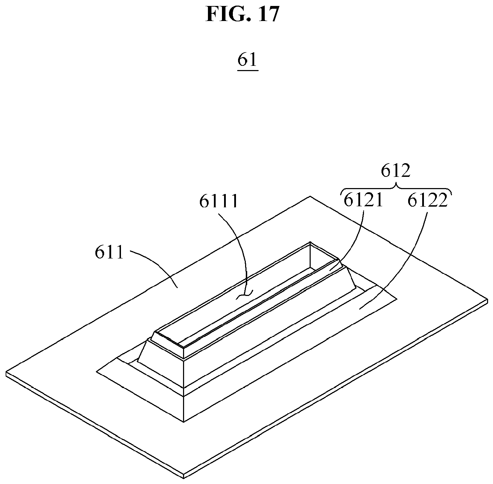

Referring to FIG. 17, a spacer 61 includes a base 611 and a protrusion 612. The base 611 may include an opening 6111. The opening 6111 may be formed in a slit shape, for example. The protrusion 612 is formed to enclose the opening 6111. The protrusion 612 includes a plastically-deformable portion 6121 and an elastically-deformable portion 6122. A thickness of the plastically-deformable portion 6121 may be less than a thickness of the elastically-deformable portion 6122.

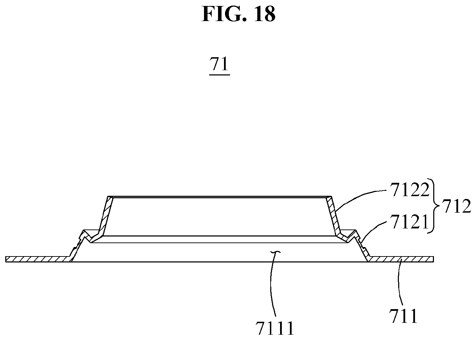

Referring to FIG. 18, a spacer 71 includes a base 711 and a protrusion 712. The base 711 may include an opening 7111, for example. The protrusion 712 includes a plastically-deformable portion 7121 and an elastically-deformable portion 7122. The elastically-deformable portion 7122 may protrude in a first direction relative to a face of the base 711, and the plastically-deformable portion 7121 may also protrude in the first direction relative to the face of the base 711. The elastically-deformable portion 7122 extends in the first direction from the plastically-deformable portion 7121. An end portion of the elastically-deformable portion 7122 is formed at a position higher than a height of the plastically-deformable portion 7121 with respect to the example face of the base 711.

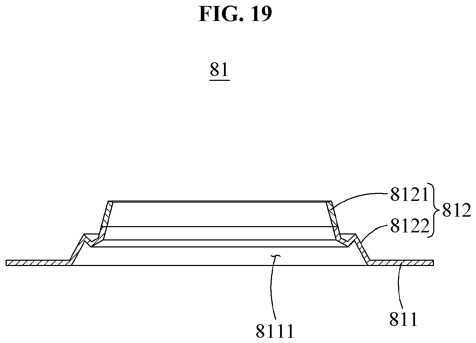

Referring to FIG. 19, a spacer 81 includes a base 811 and a protrusion 812. The base 811 may include an opening 8111, for example. The protrusion 812 includes a plastically-deformable portion 8121 and an elastically-deformable portion 8122. The plastically-deformable portion 8121 and the elastically-deformable portion 8122 may be formed of different materials and thus have different rigidities and strengths.

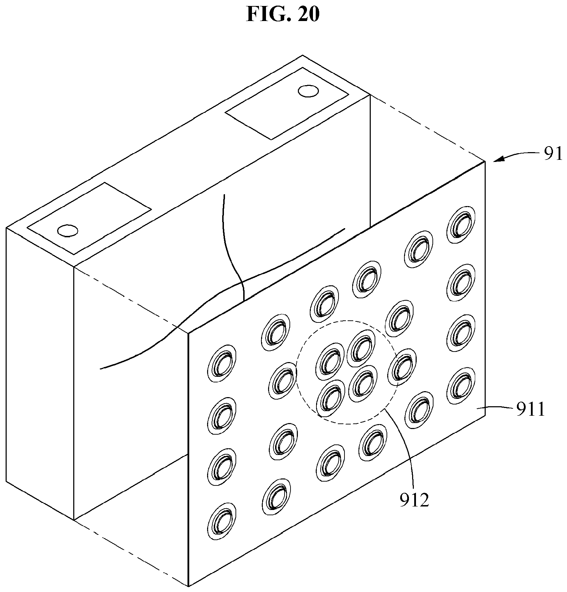

FIG. 20 is a perspective view illustrating a spacer in accordance with an embodiment.

Referring to FIG. 20, a portion of a plurality of protrusions 912 of a spacer 91 are more densely arranged on a portion of a base 911 than in other portions of the base 911. For example, a number of protrusions 912 per unit area of the base 911 may increase from an edge of the base 911 toward a center of the base 911.

For example, when a battery cell of a battery assembly is formed in a polygonal shape or a pouch type, a volume change amount in a central portion of the battery cell is greater than a volume change amount in an edge portion of the battery cell. In this example, the plurality of protrusions 912 may be more densely arranged in the central portion of the base 911 compared to edges of the base 911 so as to adjust a total variation in the battery assembly uniformly. Through this, a life of the battery cell may be prolonged.

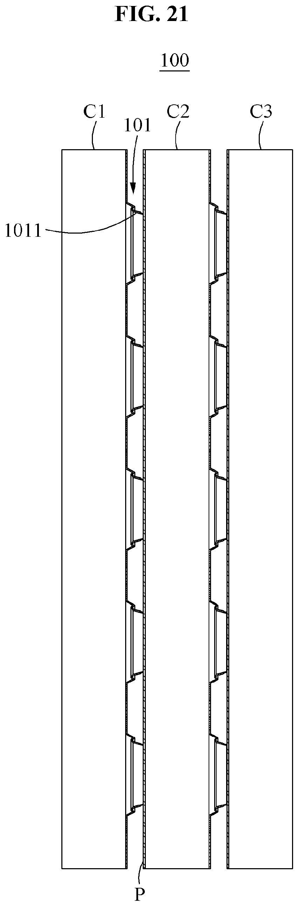

FIG. 21 is a side view illustrating a battery assembly in accordance with an embodiment.

Referring to FIG. 21, a battery assembly 100 that may include battery cells C1, C2, and C3. As illustrated in FIG. 21, for example, the battery assembly 100 may include a stiffening plate P disposed between a plurality of protrusions 1011 of a spacer 101 and the battery cell C2, for example, located adjacent to the plurality of protrusions 1011. When such a battery cell is a pouch-type battery cell, a packing material of the battery cell may be insufficiently strong. In this example, the stiffening plate P is provided between the plurality of protrusions 1011 and the example battery cell C2 located adjacent to the plurality of protrusions 1011 so as to equalize a pressure applied to the battery cell C2.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents.

## Claims

1. A battery spacer system comprising a battery spacer (11, 21, 31, 41, 51, 61, 71, 81, 91, 101) having a base (111, 211, 311, 411, 511, 611, 711, 811, 911) inserted between two adjacent battery cells and at least one protrusion (112, 212, 312, 412, 512, 612, 712, 812, 912) formed to protrude from the base;
wherein the at least one protrusion (112, 212, 312, 412, 512, 612, 712, 812, 912) includes at least one elastically-deformable portion (1122, 2122, 3122, 4122, 5122, 6122, 7122, 8122) that is configured to elastically deform at forces within a predetermined range applied by one or more of the two adjacent battery cells and at least one plastically-deformable portion (1121, 2121, 3121, 4121, 5121, 6121, 7121, 8121) that is configured to plastically deform at a force exceeding the predetermined range;
wherein the at least one plastically-deformable portion has a greater rigidity and lesser strength than the at least one elastically-deformable portion; and
wherein the at least one elastically-deformable portion protrudes in a first direction relative to a face of the base and the at least one plastically-deformable portion extends in the first direction from the at least one elastically-deformable portion, or vice versa.

2. The battery spacer system of claim 1, wherein the at least one plastically-deformable portion (1121, 2121, 3121, 4121, 5121, 6121, 7121, 8121) is configured to begin to plastically deform when a distance between the two adjacent battery cells becomes less than a setting distance, the setting distance being less than an initial distance between the two adjacent battery cells; and
wherein the at least one elastically-deformable portion (1122, 2122, 3122, 4122, 5122, 6122, 7122, 8122) is configured to be elastically deformed when the distance is greater than or equal to the setting distance and less than the initial distance.

3. The battery spacer system of claim 1 or 2, wherein the at least one elastically-deformable portion (1122, 2122, 3122, 4122, 5122, 6122, 7122, 8122) has a progressing shape that reverses in a height direction relative to the base (111, 211, 311, 411, 511, 611, 711, 811, 911) at least once.

4. The battery spacer system of claim 3, wherein the at least one elastically-deformable portion (1122, 2122, 3122, 4122, 5122, 6122, 8122) protrudes in a first direction relative to a face of the base (111, 211, 311, 411, 511, 611, 711, 811, 911), and
a corresponding one of the at least one plastically-deformable portion (1121, 2121, 3121, 4121, 5121, 6121, 8121) extends in the first direction from the at least one elastically-deformable portion,
wherein an end portion of the corresponding one of the at least one plastically-deformable portion is in particular formed at a position of the battery spacer that is higher than a maximum height of the at least one elastically-deformable portion, relative to a face of the base (111, 211, 311, 411, 511, 611, 711, 811, 911).

5. The battery spacer system of claim 4, wherein the at least one elastically-deformable portion (1122, 2122, 3122, 4122, 5122, 6122, 8122) and the corresponding one of the at least one plastically-deformable portion (1121, 2121, 3121, 4121, 5121, 6121, 8121) are formed of a same material,
wherein a thickness of the corresponding one of the at least one plastically-deformable portion (1121, 2121, 3121, 4121, 5121, 6121, 8121) is in particular less than a thickness of the at least one elastically-deformable portion (1122, 2122, 3122, 4122, 5122, 6122, 8122), or
wherein the corresponding one of the at least one plastically-deformable portion (2121, 3121) in particular includes at least one cut-out portion (2121a, 3121a).

6. The battery spacer system of claim 5, wherein the cut-out portion is a recess (2121a) recessed from the end portion toward the base or a slot (3121a) formed on the corresponding one of the at least one plastically-deformable portion (2121, 3121),
wherein the slot (3121a) is in particular laterally formed along a circumference of the corresponding one of the at least one plastically-deformable portion (3121).

7. The battery spacer system of claim 4, wherein the at least one elastically-deformable portion (1122, 2122, 3122, 4122, 5122, 6122, 8122) and the corresponding one of the at least one plastically-deformable portion (1121, 2121, 3121, 4121, 5121, 6121, 8121) are formed of different materials.

8. The battery spacer system of claim 3, wherein the at least one plastically-deformable portion (7121) protrudes in a first direction relative to a face of the base (711), and
a corresponding one of the at least one elastically-deformable portion (7122) extends in the first direction from the at least one plastically-deformable portion.

9. The battery spacer system of one of claims 1 to 8, wherein the at least one protrusion is formed of a polymer, aluminum, or phosphor bronze,
wherein the base (111, 211, 411, 511, 611, 711, 811, 911) in particular includes an opening (1111, 2111, 4111, 5111, 6111, 7111, 8111), and the protrusion is in particular formed to enclose the opening, and
wherein the opening (1111, 2111, 4111, 5111, 6111, 7111, 8111) in particular has a shape of a circle, a polygon, or a slit.

10. A battery assembly comprising:
a first battery cell;
a second battery cell; and
a battery spacer system of one of the preceding claims, disposed between the first battery cell and the second battery cell.

11. The battery assembly of claim 10, wherein the base (111, 211, 411, 511, 611, 711, 811, 911) is provided in contact with the first battery cell; and
wherein the battery spacer (11, 21, 31, 41, 51, 61, 71, 81, 91, 101) includes a plurality of protrusions (112, 212, 312, 412, 512, 612, 712, 812, 912) that protrude in a direction from the base toward the second battery cell, and
where each of the plurality of protrusions includes:
a plastically-deformable portion (1121, 2121, 3121, 4121, 5121, 6121, 7121, 8121) configured to plastically deform when the distance is less than a setting distance, the setting distance being less than an initial distance between the first battery cell and the second battery cell; and
an elastically-deformable portion (1122, 2122, 3122, 4122, 5122, 6122, 7122, 8122) configured to elastically deform when the distance is greater than or equal to the setting distance and less than the initial distance.

12. The battery assembly of claim 11, wherein the plurality of protrusions (912) are more densely arranged in a first protrusion-including area of the base (911) between the two adjacent battery cells than in another protrusion-including area of the base (911) between the two adjacent battery cells, or
wherein a number of protrusions (912) per unit area of the base (911) increases from an edge of the base (911) toward a center of the base (911).

13. The battery assembly of claim 11 or 12, further comprising:
a stiffening plate disposed between the second battery cell and the plurality of protrusions.

14. The battery assembly of one of claims 11 to 13, wherein each of the plastically-deformable portions (1121, 2121, 3121, 4121, 5121, 6121, 7121, 8121) has a length between 2.5% and 10% of an initial operating thickness of one of the first battery cell and the second battery cell.

## Patentansprüche

1. Batterieabstandshaltersystem mit einem Batterieabstandshalter (11, 21, 31, 41, 51, 61,71, 81, 91, 101), der ein Basiselement (111, 211, 311, 411, 511, 611, 711, 811, 911) aufweist, das zwischen zwei benachbarten Batteriezellen eingefügt ist und mindestens einen Vorsprung (112, 212, 312, 412, 512, 612, 712, 812, 912) aufweist, der so ausgebildet ist, dass er aus dem Basiselement hervorsteht;
wobei der mindestens eine Vorsprung (112, 212, 312, 412, 512, 612, 712, 812, 912) mindestens einen elastisch verformbaren Bereich (1122, 2122, 3122, 4122, 5122, 6122, 7122, 8122) aufweist, der ausgebildet ist, sich bei in einem vorbestimmten Bereich liegenden Kräften, die durch eine oder mehrere der zwei benachbarten Batteriezellen ausgeübt werden, elastisch zu verformen, und mindestens einen plastisch verformbaren Bereich (1121, 2121, 3121, 4121, 5121, 6121, 7121, 8121) aufweist, der ausgebildet ist, sich bei einer Kraft, die den vorbestimmten Bereich übersteigt, plastisch zu verformen;
wobei der mindestens eine plastisch verformbare Bereich eine größere Steifigkeit und eine kleinere Festigkeit hat als der mindestens eine elastisch verformbare Bereich; und
wobei der mindestens eine elastisch verformbare Bereich in einer ersten Richtung relativ zu einer Fläche des Basiselements hervorsteht und der mindestens eine plastisch verformbare Bereich sich von dem mindestens einen elastisch verformbaren Bereich in die erste Richtung erstreckt, oder umgekehrt.

2. Batterieabstandshaltersystem nach Anspruch 1, wobei der mindestens eine plastisch verformbare Bereich (1121, 2121, 3121, 4121, 5121, 6121, 7121, 8121) ausgebildet ist, mit der plastischen Verformung zu beginnen, wenn ein Abstand zwischen den zwei benachbarten Batteriezellen kleiner wird als ein Sollabstand, wobei der Sollabstand kleiner ist als ein anfänglicher Abstand zwischen den zwei benachbarten Batteriezellen; und
wobei der mindestens eine elastisch verformbare Bereich (1122, 2122, 3122, 4122, 5122, 6122, 7122, 8122) ausgebildet ist, elastisch verformt zu werden, wenn der Abstand größer oder gleich dem Sollabstand und kleiner als der anfängliche Abstand ist.

3. Batterieabstandshaltersystem nach Anspruch 1 oder 2, wobei der mindestens eine elastisch verformbare Bereich (1122, 2122, 3122, 4122, 5122, 6122, 7122, 8122) eine abgleitende Form hat, die sich in einer Höhenrichtung relativ zu dem Basiselement (111, 211, 311, 411, 511, 611, 711, 811, 911) mindestens einmal umkehrt.

4. Batterieabstandshaltersystem nach Anspruch 3, wobei der mindestens eine elastisch verformbare Bereich (1122, 2122, 3122, 4122, 5122, 6122, 8122) relativ zu einer Fläche des Basiselements (111, 211, 311, 411, 511, 611, 711, 811, 911) in einer ersten Richtung hervorsteht, und
ein entsprechender plastisch verformbarer Bereich des mindestens einen plastisch verformbaren Bereichs (1121, 2121, 3121, 4121, 5121, 6121, 8121) sich ausgehend von dem mindestens einen elastisch verformbaren Bereich in der ersten Richtung erstreckt,
wobei ein Endbereich des entsprechenden einen plastisch verformbaren Bereichs des mindestens einen plastisch verformbaren Bereichs insbesondere an einer Stelle des Batterieabstandshalters ausgebildet ist, die höher liegt als eine maximale Höhe des mindestens einen elastisch verformbaren Bereichs relativ zu einer Fläche des Basiselements (111, 211, 311, 411, 511, 611, 711, 811, 911).

5. Batterieabstandshaltersystem nach Anspruch 4, wobei der mindestens eine elastisch verformbare Bereich (1122, 2122, 3122, 4122, 5122, 6122, 8122) und der entsprechende eine plastisch verformbare Bereich des mindestens einen plastisch verformbaren Bereichs (1121, 2121, 3121, 4121, 5121, 6121, 8121) aus dem gleichen Material hergestellt sind,
wobei eine Dicke des entsprechenden einen plastisch verformbaren Bereichs des mindestens einen plastisch verformbaren Bereichs (1121, 2121, 3121, 4121, 5121, 6121, 8121) insbesondere kleiner ist als eine Dicke des mindestens einen elastisch verformbaren Bereichs (1122, 2122, 3122, 4122, 5122, 6122, 8122), oder
wobei der entsprechende eine plastisch verformbare Bereich des mindestens einen plastisch verformbaren Bereichs (2121, 3121) insbesondere mindestens einen ausgeschnittenen Bereich (2121a, 3121a) aufweist.

6. Batterieabstandshaltersystem nach Anspruch 5, wobei der ausgeschnittene Bereich eine Aussparung (2121a) ist, die aus den Endbereichen in Richtung zu dem Basiselement zurückgesetzt ist, oder ein Schlitz (3121a) ist, der auf dem entsprechenden einen plastisch verformbaren Bereich des mindestens einen plastisch verformbaren Bereichs (2121, 3121) ausgebildet ist,
wobei der Schlitz (3121a) insbesondere lateral entlang eines Umfangs des entsprechenden einen Bereichs des mindestens einen plastisch verformbaren Bereichs (3121) ausgebildet ist.

7. Batterieabstandshaltersystem nach Anspruch 4, wobei der mindestens eine elastisch verformbare Bereich (1122, 2122, 3122, 4122, 5122, 6122, 8122) und der entsprechende eine plastisch verformbare Bereich des mindestens einen plastisch verformbaren Bereichs (1121, 2121, 3121, 4121, 5121, 6121, 8121) aus unterschiedlichen Materialien hergestellt sind.

8. Batterieabstandshaltersystem nach Anspruch 3, wobei der mindestens eine plastisch verformbare Bereich (7121) relativ zu einer Fläche des Basiselements (711) in einer ersten Richtung hervorsteht, und
ein entsprechender plastisch verformbarer Bereich des mindestens einen elastisch verformbaren Bereichs (7122) sich ausgehend von dem mindestens einen plastisch verformbaren Bereich in der ersten Richtung erstreckt.

9. Batterieabstandshaltersystem nach einem der Ansprüche 1 bis 8, wobei der mindestens eine Vorsprung aus einem Polymer, Aluminium oder Phosphorbronze hergestellt ist,
wobei das Basiselement (111, 211, 311, 411, 511, 611, 711, 811, 911) insbesondere eine Öffnung (1111, 2111, 4111, 5111, 6111, 7111, 8111) aufweist und der Vorsprung insbesondere so ausgebildet ist, dass er die Öffnung umschließt, und
wobei die Öffnung (1111, 2111, 4111, 5111, 6111, 7111, 8111) insbesondere die Form eines Kreises, eines Polygons oder eines Schlitzes hat.

10. Batterieanordnung, mit:
einer ersten Batteriezelle;
einer zweiten Batteriezelle; und
einem Batterieabstandshaltersystem nach einem der vorhergehenden Ansprüche, das zwischen der ersten Batteriezelle und der zweiten Batteriezelle angeordnet ist.

11. Batterieanordnung nach Anspruch 10, wobei das Basiselement (111, 211, 411, 511, 611, 711, 811, 911) so vorgesehen ist, dass es mit der ersten Batteriezelle in Kontakt ist; und wobei der Batterieabstandshalter (11, 21, 31, 41, 51,16,71, 81, 91, 101) mehrere Vorsprünge (112, 212, 312, 412, 512, 612, 712, 812, 912) aufweist, die ausgehend von dem Basiselement in Richtung zu der zweiten Batteriezelle hervorstehen, und
wobei jeder der mehreren Vorsprünge aufweist:
einen plastisch verformbaren Bereich ((1121, 2121, 3121, 4121, 5121, 6121, 7121, 8121), der ausgebildet ist, sich plastisch zu verformen, wenn der Abstand kleiner ist als ein Sollabstand, wobei der Sollabstand kleiner ist als ein anfänglicher Abstand zwischen der ersten Batteriezelle und der zweiten Batteriezelle; und
einen elastisch verformbaren Bereich (1122, 2122, 3122, 4122, 5122, 6122, 7122, 8122), der ausgebildet ist, sich elastisch zu verformen, wenn der Abstand größer oder gleich dem Sollabstand und kleiner als der anfängliche Abstand ist.

12. Batterieanordnung nach Anspruch 11, wobei die mehreren Vorsprünge (912) in einem ersten Vorsprung enthaltenden Bereich des Basiselements (911) zwischen den zwei benachbarten Batteriezellen dichter angeordnet sind als in einem weiteren Vorsprung enthaltenden Bereich des Basiselements (911) zwischen den zwei benachbarten Batteriezellen, oder
wobei eine Anzahl an Vorsprüngen (912) pro Einheitsfläche des Basiselements (911) von einem Rand des Basiselements (911) zu einer Mitte des Basiselements (911) zunimmt.

13. Batterieanordnung nach Anspruch 11 oder 12, die ferner aufweist:
eine Versteifungsplatte, die zwischen der zweiten Batteriezelle und den mehreren Vorsprüngen angeordnet ist.

14. Batterieanordnung nach einem der Ansprüche 11 bis 13, wobei jeder der plastisch verformbaren Bereiche (1121, 2121, 3121, 4121, 5121, 6121, 7121, 8121) eine Länge zwischen 2,5 % und 10 % einer anfänglichen Betriebsdicke der ersten Batteriezelle oder der zweiten Batteriezelle hat.

## Revendications

1. Système espaceur de batterie comprenant un espaceur de batterie (11, 21, 31, 41, 51, 61, 71, 81, 91, 101) comportant une base (111, 211, 311, 411, 511, 611, 711, 811, 911) insérée entre deux éléments de batterie adjacents et au moins une saillie (112, 212, 312, 412, 512, 612, 712, 812, 912) formée de manière à faire saillie par rapport à la base ;
dans lequel l'au moins une saillie (112, 212, 312, 412, 512, 612, 712, 812, 912) comporte au moins une partie élastiquement déformable (1122, 2122, 3122, 4122, 5122, 6122, 7122, 8122) qui est conçue pour se déformer élastiquement en présence de forces comprises dans une plage prédéfinie appliquées par au moins un des deux éléments de batterie adjacents et au moins une partie plastiquement déformable (1121, 2121, 3121, 4121, 5121, 6121, 7121, 8121) qui est conçue pour se déformer plastiquement en présence d'une force dépassant la plage prédéfinie ;
dans lequel l'au moins une partie plastiquement déformable a une plus grande rigidité et une moins grande résistance que l'au moins une partie élastiquement déformable ; et
dans lequel l'au moins une partie élastiquement déformable fait saillie dans une première direction par rapport à une face de la base et l'au moins une partie plastiquement déformable s'étend dans la première direction à partir de l'au moins une partie élastiquement déformable, ou inversement.

2. Système espaceur de batterie selon la revendication 1, dans lequel l'au moins une partie plastiquement déformable (1121, 2121, 3121, 4121, 5121, 6121, 7121, 8121) est conçue pour commencer à se déformer plastiquement lorsqu'une distance entre les deux éléments de batterie adjacents devient inférieure à une distance de réglage, la distance de réglage étant inférieure à une distance initiale entre les deux éléments de batterie adjacents ; et
dans lequel l'au moins une partie élastiquement déformable (1122, 2122, 3122, 4122, 5122, 6122, 7122, 8122) est conçue pour être déformée élastiquement lorsque la distance est supérieure ou égale à la distance de réglage et inférieure à la distance initiale.

3. Système espaceur de batterie selon la revendication 1 ou 2, dans lequel l'au moins une partie élastiquement déformable (1122, 2122, 3122, 4122, 5122, 6122, 7122, 8122) a une forme qui avance et s'inverse, dans un sens de la hauteur, par rapport à la base (111, 211, 311, 411, 511, 611, 711, 811, 911) au moins une fois.

4. Système espaceur de batterie selon la revendication 3, dans lequel l'au moins une partie élastiquement déformable (1122, 2122, 3122, 4122, 5122, 6122, 8122) fait saillie dans une première direction par rapport à une face de la base (111, 211, 311, 411, 511, 611, 711, 811, 911), et
une partie correspondante parmi les au moins une parties plastiquement déformables (1121, 2121, 3121, 4121, 5121, 6121, 8121) s'étend dans la première direction à partir de l'au moins une partie élastiquement déformable,
dans lequel une partie d'extrémité de la partie correspondante parmi les au moins une parties plastiquement déformables est notamment formée au niveau d'une position de l'espaceur de batterie qui est plus élevée qu'une hauteur maximale de l'au moins une partie élastiquement déformable par rapport à une face de la base (111, 211, 311, 411, 511, 611, 711, 811, 911).

5. Système espaceur de batterie selon la revendication 4, dans lequel l'au moins une partie élastiquement déformable (1122, 2122, 3122, 4122, 5122, 6122, 8122) et la partie correspondante parmi les au moins une parties plastiquement déformables (1121, 2121, 3121, 4121, 5121, 6121, 8121) sont formées d'un même matériau,
dans lequel une épaisseur de la partie correspondante parmi les au moins une parties plastiquement déformables (1121, 2121, 3121, 4121, 5121, 6121, 8121) est notamment inférieure à une épaisseur de l'au moins une partie élastiquement déformable (1122, 2122, 3122, 4122, 5122, 6122, 8122), ou
dans lequel la partie correspondante parmi les au moins une parties plastiquement déformables (2121, 3121) comporte notamment au moins une partie découpée (2121a, 3121a).

6. Système espaceur de batterie selon la revendication 5, dans lequel la partie découpée est un creux (2121a) ménagé de la partie d'extrémité en direction de la base ou une fente (3121a) formée sur la partie correspondante parmi les au moins une parties plastiquement déformables (2121, 3121),
dans lequel la fente (3121a) est notamment formée latéralement le long d'une circonférence de la partie correspondante parmi les au moins une parties plastiquement déformables (3121).

7. Système espaceur de batterie selon la revendication 4, dans lequel l'au moins une partie élastiquement déformable (1122, 2122, 3122, 4122, 5122, 6122, 8122) et la partie correspondante parmi les au moins une parties plastiquement déformables (1121, 2121, 3121, 4121, 5121, 6121, 8121) sont formées de matériaux différents.

8. Système espaceur de batterie selon la revendication 3, dans lequel l'au moins une partie plastiquement déformable (7121) fait saillie dans une première direction par rapport à une face de la base (711), et
une partie correspondante parmi les au moins une parties élastiquement déformables (7122) s'étend dans la première direction à partir de l'au moins une partie plastiquement déformable.

9. Système espaceur de batterie selon l'une des revendications 1 à 8, dans lequel l'au moins une saillie est formée d'un polymère, d'aluminium ou de bronze au phosphore,
dans lequel la base (111, 211, 311, 411, 511, 611, 711, 811, 911) comporte notamment une ouverture (1111, 2111, 4111, 5111, 6111, 7111, 8111) et la saillie est notamment formée de manière à entourer l'ouverture, et
dans lequel l'ouverture (1111, 2111, 4111, 5111, 6111, 7111, 8111) a notamment la forme d'un cercle, d'un polygone ou d'une fente.

10. Ensemble batterie comprenant :
un premier élément de batterie ;
un second élément de batterie ; et
un système espaceur de batterie selon l'une des revendications précédentes, disposé entre le premier élément de batterie et le second élément de batterie.

11. Ensemble batterie selon la revendication 10, dans lequel la base (111, 211, 411, 511, 611, 711, 811, 911) se trouve en contact avec le premier élément de batterie ; et
dans lequel l'espaceur de batterie (11, 21, 31, 41, 51, 61, 71, 81, 91, 101) comprend une pluralité de saillies (112, 212, 312, 412, 512, 612, 712, 812, 912) qui font saillie dans une direction partant de la base en direction du second élément de batterie, et
chacune de la pluralité des saillies comportant :
une partie plastiquement déformable (1121, 2121, 3121, 4121, 5121, 6121, 7121, 8121) conçue pour se déformer plastiquement lorsque la distance est inférieure à une distance de réglage, la distance de réglage étant inférieure à une distance initiale entre le premier élément de batterie et le second élément de batterie ; et
une partie élastiquement déformable (1122, 2122, 3122, 4122, 5122, 6122, 7122, 8122) conçue pour se déformer élastiquement lorsque la distance est supérieure ou égale à la distance de réglage et inférieure à la distance initiale.

12. Ensemble batterie selon la revendication 11, dans lequel la pluralité de saillies (912) occupe une première zone incluant des saillies de la base (911) entre les deux éléments de batterie adjacents de manière plus dense que dans une autre zone incluant des saillies de la base (911) entre les deux éléments de batterie adjacents, ou
dans lequel un nombre de saillies (912) par unité de surface de la base (911) augmente d'un bord de la base (911) en direction du centre de la base (911).

13. Ensemble batterie selon la revendication 11 ou 12, comprenant, en outre :
une plaque de raidissement disposée entre le second élément de batterie et la pluralité de saillies.

14. Ensemble batterie selon l'une des revendications 11 à 13, dans lequel chacune des parties plastiquement déformables (1121, 2121, 3121, 4121, 5121, 6121, 7121, 8121) a une longueur comprise entre 2,5% et 10% d'une épaisseur de fonctionnement initiale du premier élément de batterie ou du second élément de batterie.
